# FASCICULE DE BREVET EUROPEEN

(11) **EP 2 121 384 B1**
(45) Date de publication et mention de la délivrance du brevet: **13.07.2011**
(21) Numéro de dépôt: 07858037.0
(22) Date de dépôt: 21.12.2007
(51) Int. Cl.: B60R 13/08, B60R 13/02

(54) **AGENCEMENT D'UN DISPOSITIF D'ABSORPTION D'ONDES SONORES**
ANORDNUNG ZUR ABSORPTION VON SCHALLWELLEN
DEVICE ASSEMBLY FOR ABSORBING SOUND WAVES

(30) Priorité: 22.12.2006 FR 0655848
(43) Date de publication de la demande: 25.11.2009
(73) Titulaire: Renault S.A.S., 92100 Boulogne-Billancourt (FR)
(72) Inventeur: ZHANG, Charles, F-78280 Guyancourt (FR); CLEMENT-CRESPEL, Cécile, F-78460 Cheuvreuse (FR); VEZINE, Marjorie, F-78940 La Queue Lez Yvelines (FR)
(86) Numéro de dépôt international: PCT/EP2007/064422
(87) Numéro de publication internationale: WO 2008/077923

(56) Documents cités:
- WO-A-99/44816
- DE-A1- 19 804 567
- DE-U1- 20 317 241
- FR-A- 1 444 097
- JP-A- 61 235 278
- JP-A- 2000 034 937

## Description

L'invention se rapporte à un dispositif d'absorption d'ondes sonores selon le préambule de la revendication 1. FR 1 444 097 décrit un tel dispositif.

Dans l'habitacle d'un véhicule automobile, l'absorption acoustique est essentiellement assurée par les sièges et les habillages intérieurs.

La fréquence de coïncidence ou fréquence critique d'un vitrage d'un véhicule est généralement comprise sensiblement entre 3000 Hz et 4000Hz. À la fréquence de coïncidence, l'isolation d'une lunette de hayon diminue significativement. L'isolation du vitrage peut diminuer jusqu'à atteindre des chutes de 10 dB, ce qui crée un « trou acoustique » et les passagers arrière peuvent alors avoir une sensation de transparence au bruit extérieur et au bruit d'air pour certaines fréquences d'ondes sonores.

Ce phénomène de coïncidence est plus marqué pour une lunette de hayon et pour des vitres de custode pour lesquelles le facteur de perte est plus faible, comparé à celui d'une vitre feuilletée telle qu'un pare-brise ou une vitre mobile.

Pour remédier au phénomène de coïncidence, il est possible d'augmenter l'amortissement des vibrations de la lunette de hayon en utilisant un verre feuilleté avec un film plastique spécifiquement conçu pour renforcer l'isolation acoustique tel que le butyral de polyvinyle acoustique (PVB acoustique), ce qui peut représenter un surcoût important. Il est également possible d'utiliser un matériau absorbant à proximité de la vitre qui absorbe le bruit rayonné en augmentant l'effet d'absorption de la tablette arrière. Cette solution nécessite une couche de matériaux poreux assez épais, et peut être limitée par des contraintes d'architecture, telles que le manque de place.

Un but de l'invention est donc de proposer une tablette arrière très absorbante sur une bande de fréquence correspondant à la fréquence de coïncidence de la lunette de hayon.

Dans ce but, l'objet de l'invention est un agencement d'un dispositif d'absorption d'ondes sonores selon la revendication 1.

Une telle tablette permet de créer des cavités dans l'armature de la tablette pour piéger des ondes sonores sans avoir besoin d'espace supplémentaire ou du matériau spécial.

Une telle tablette arrière agencée dans un véhicule est très absorbante sur une bande de fréquence correspondant à la fréquence de coïncidence de la lunette de hayon. Elle permet avantageusement de maximiser le coefficient d'absorption pour des fréquences sensiblement comprises entre 3000 Hz et 4000 Hz et ainsi compenser la perte d'isolation de la lunette de hayon due à la fréquence de résonance.

Une tablette arrière selon l'invention permet d'obtenir un facteur d'absorption élevé dans une bande de fréquence sélectionnée.

De plus, il est de plus possible de réduire les coûts de fabrication d'une telle tablette arrière lorsque les cavités acoustiques sont formées dans l'armature de la tablette avant la réalisation de l'outillage.

Suivant des modes particuliers de réalisation, l'agencement du dispositif précité comporte l'une ou plusieurs des caractéristiques suivantes :
- le premier élément et le deuxième élément du dispositif peuvent être respectivement une lunette de hayon et une tablette arrière,
- la couche d'absorption et les cavités acoustiques fermées par ladite couche absorbant peuvent former des résonateurs dont la fréquence est sensiblement comprise entre 3000 Hz et 4000 Hz,
- la cavité acoustique peut avoir une profondeur sensiblement supérieure à 5 millimètres, de préférence sensiblement comprise entre 5 et 10 millimètres,
- la couche d'absorption peut être un tissu d'aspect poreux,
- le corps de tablette peut être en mousse polyuréthane (PU),
- le corps de tablette peut comporter une pluralité de résonateurs occupant au moins 10% de sa surface totale,
- la cavité acoustique peut être un insert poreux,
- le deuxième élément peut comporter une coque semi rigide perméable intercalée entre le corps de tablette et la couche d'absorption, la coque ayant une résistance au passage d'air sensiblement comprise entre 500 et 2000 Nsm ⁻³ de manière que la rigidité des résonateurs est renforcée,
- le corps de tablette peut comporter des résonateurs en structure de nid d'abeille.

L'invention sera mieux comprise par la description ci-après de modes de réalisation donnés à titre d'exemple en référence aux dessins annexés, dans lesquels :
- la figure 1 représente une vue en coupe d'une tablette arrière d'un véhicule
- la figure 2 représente les courbes de coefficient d'absorption de cinq échantillons d'une tablette arrière en fonction de la fréquence,
- la figure 3 représente les courbes de coefficient d'absorption de quatre échantillons d'une tablette arrière en fonction de la fréquence,
- la figure 4a représente deux échantillons de cavités de formes différentes
- la figure 4b représente les courbes de coefficient d'absorption des échantillons de la figure 4a,
- la figure 5 représente les courbes de coefficient d'absorption de trois échantillons d'une tablette arrière en fonction de la fréquence,
- la figure 6 représente une portion de tablette arrière ayant une structure en nid d'abeille

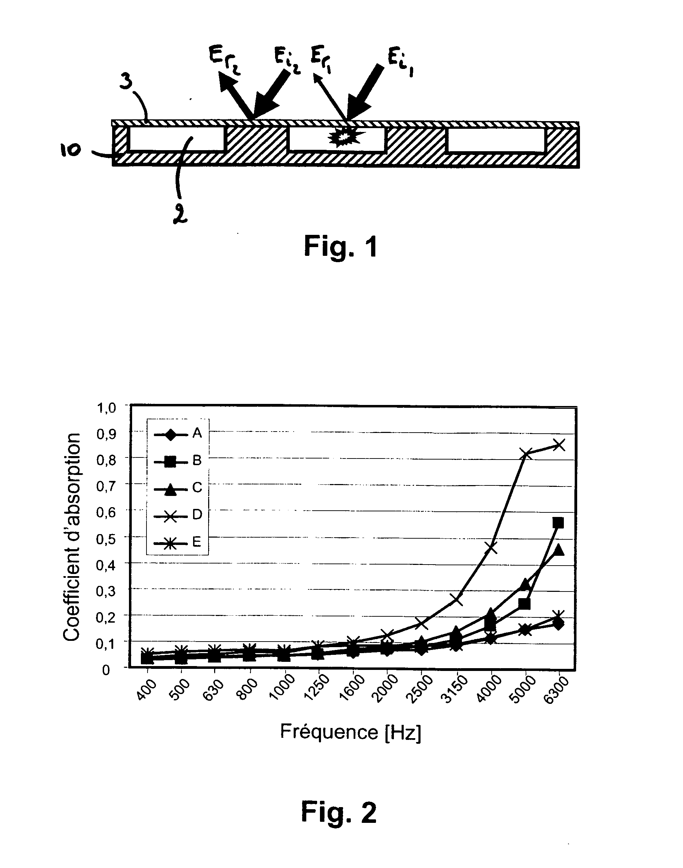

À la figure 1, on a représenté une portion d'une tablette arrière 1 d'un véhicule automobile. La tablette arrière 1 doit permettre de maximiser le coefficient d'absorption pour des fréquences correspondant à la fréquence de coïncidence d'une lunette de hayon non représentée, sensiblement comprises entre 3000 HZ et 4000 Hz.

La tablette arrière 1 comporte un corps de tablette 10 comportant une face supérieure 100 et une face inférieure 101. Le corps de tablette est de préférence injecté de mousse polyuréthane ou mousse PU, de façon à minimiser les coûts de production, et d'une épaisseur d'une vingtaine de millimètres environ. Des ouvertures 5 sont ménagées sur la face supérieure 100 créant ainsi des cavités acoustiques 2 à l'intérieur du corps de tablette 10.

La face supérieure du corps de tablette 10 est recouverte par une couche d'absorption 3 d'ondes sonores en matière absorbante, poreuse, par exemple un tissu d'aspect 3. Ainsi les cavités acoustiques 2 débouchant dans la face supérieure 100 du corps de tablette 10 sont recouvertes par le tissu d'aspect 3. La forme de la tablette est donnée à titre d'exemple non limitatif. La tablette arrière 1 peut être constituée de deux couches minces d'une épaisseur par exemple sensiblement égales à 2 millimètres, comportant des cavités acoustiques embouties.

Chaque cavité 2 fermée par le tissu d'aspect 3 forme un résonateur qui, à sa fréquence de résonance, peut absorber un maximum d'énergie incidente *E*_{*i*1}. Une partie de l'énergie acoustique est ainsi piégée dans le résonateur 2 sous le tissu d'aspect 3. La tablette arrière 1 restitue une énergie *E*_{*r*1} plus importante comparée à une énergie *Eᵣ₂* qui serait restituée lorsque l'énergie *E*_{*r*2} correspondante incidente ne rencontre pas de cavité 2 absorbante. La surface occupée par les cavités acoustiques ou résonateurs 2 est de préférence sensiblement supérieure à 10% de la surface totale de la tablette arrière de manière à absorber suffisamment d'énergie et permettre de compenser la perte d'isolation de la lunette de hayon due à la fréquence de résonance des cavités acoustiques 2.

Les dimensions des cavités 2 sont telles que les résonances de l'ensemble constitué par le tissu d'aspect 3 et les cavités acoustiques 2 sont proches de la fréquence de coïncidence de la lunette de hayon, c'est-à-dire telles que leurs fréquences de résonance sont situées sur une bande de fréquence sensiblement comprise entre 3000 Hz et 4000 Hz.

Les cavités 2 et le tissu d'aspect 3 forment des résonateurs qui permettent de piéger l'énergie acoustique traversant la lunette dans les résonateurs 2 et de l'absorber par des vibrations du tissu d'aspect 3.

La fréquence de résonance dépend de la dimension de la cavité acoustique 2, c'est-à-dire de sa profondeur et de son diamètre, et également des caractéristiques du tissu d'aspect. En effet, à la figure 2, sont représentés les courbes de coefficient d'absorption en fonction de la fréquence de cinq échantillons A, B, C, D, E d'une tablette arrière 1 de diamètre sensiblement égal à 30 mm et recouverts avec un tissu d'aspect de diamètre sensiblement égal à 2 mm, ayant une résistivité au passage d'air de sensiblement 90 Nsm⁻³. Ces tests montrent que les coefficients d'absorption dépendent des dimensions des cavités 2. L'échantillon A ne comporte aucune cavité ou résonateur 2. L'échantillon B comporte cinq cavités de forme sensiblement cylindrique, de diamètre sensiblement égal à 3 mm, et de profondeur sensiblement égale à 5 mm. L'échantillon C comporte cinq cavités de forme sensiblement cylindrique, de diamètre sensiblement égal à 5 mm, et de profondeur sensiblement égale à 5 mm. L'échantillon D comporte cinq cavités de forme sensiblement cylindrique, de diamètre sensiblement égal à 5 mm, et de profondeur sensiblement égale à 10 mm. L'échantillon E présente les mêmes propriétés que l'échantillon D avec un film étanche intercalé entre le tissu d'aspect et les cavités.

On peut constater ainsi que le coefficient d'absorption d'un tel tissu d'aspect est de seulement 10% pour une fréquence sensiblement égale à 3000 Hz, d'après les résultats de l'échantillon A. Lorsqu'on modifie le diamètre des cavités de 3 mm à 5 mm, le coefficient d'absorption varie peu, tandis que si la profondeur est modifiée de 5 mm à 10 mm, la variation du coefficient d'absorption est significative, et passe de 10% à 25% pour une fréquence sensiblement égale à 3000 Hz. La variation du coefficient d'absorption passe de 20% à plus de 45% pour une fréquence sensiblement égale à 4000 Hz. L'ajout d'un film étanche entre les cavités et le tissu d'aspect à l'échantillon D fait fortement chuter le coefficient d'absorption. C'est pourquoi on préférera utiliser une coque semi poreuse plutôt que d'intercaler de couche étanche, de film ou de la colle entre les cavités 2 et la fermeture poreuse. Toutefois une coque semi poreuse, laissant passer l'air, avec une résistivité au passage d'air sensiblement comprise entre 500 et 2000 Nsm⁻³ peut être intercalée entre le tissu d'aspect 3 et les cavités acoustiques 2. Cette coque permet notamment de renforcer la rigidité des cavités acoustiques 2 qui sinon peuvent être ressenties au toucher.

Pour une fréquence de coïncidence d'une lunette de hayon, les cavités acoustiques 2 ont une profondeur sensiblement supérieure à 5 mm. Cette profondeur peut être avantageusement comprise entre 5 mm et 10 mm, la profondeur maximale des cavités acoustiques 2 pouvant être limitée par la profondeur maximale de la lunette arrière.

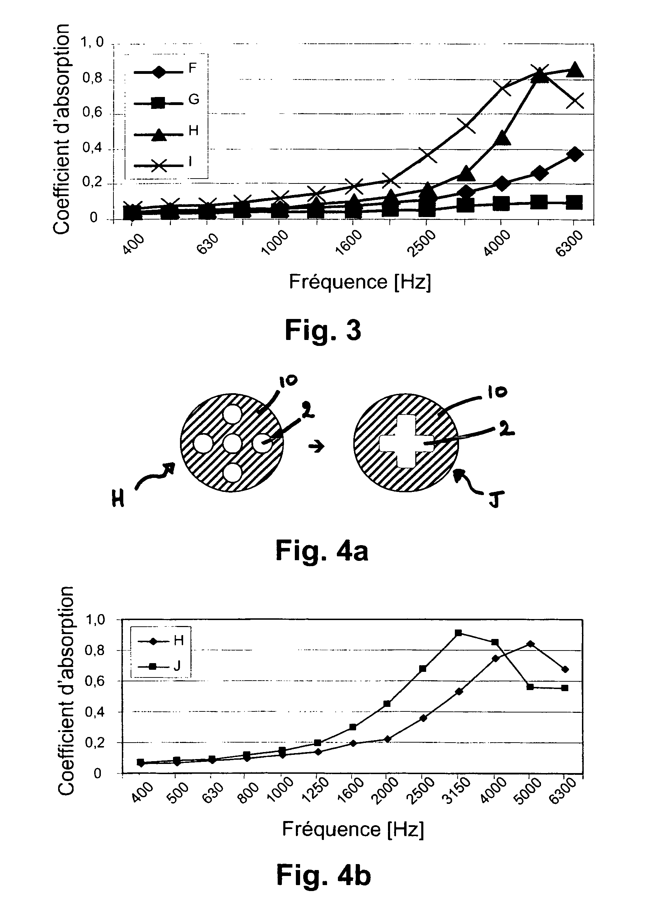

L'efficacité de l'absorption des résonateurs dépend également des caractéristiques du matériau de tissu d'aspect, et notamment de la résistance au passage d'air. Le tissu d'aspect 3 est choisi pour permettre une absorption maximum de l'énergie capturée dans les cavités acoustiques. En effet, on a représenté à la figure 3 des courbes de coefficient d'absorption en fonction de la fréquence de quatre échantillon F, G, H, **I** d'une tablette arrière de diamètre 1 sensiblement égal à 30 mm et recouverts avec un tissu d'aspect de diamètre sensiblement égal à 2 mm, de résistivité au passage d'air de sensiblement 90 Nsm⁻³. L'échantillon F ne comporte aucune cavité et est recouvert d'un premier matériau du tissu d'aspect d'une épaisseur de 4 mm et d'une résistivité au passage d'air sensiblement égale à 700 Nsm⁻³. L'échantillon G ne comporte aucune cavité mais est recouvert d'un deuxième matériau d'épaisseur sensiblement égale à 2 mm et de résistivité au passage d'air de 90 Nsm⁻³. L'échantillon H comporte cinq cavités de forme sensiblement cylindrique, de diamètre sensiblement égal à 5 mm, et de profondeur sensiblement égale à 10 mm, recouvertes par le premier matériau du tissu d'aspect. L'échantillon I comporte cinq cavités de forme sensiblement cylindrique, de diamètre sensiblement égal à 5 mm, et de profondeur sensiblement égale à 10 mm, recouvertes par le deuxième matériau de tissu d'aspect. En utilisant le deuxième matériau, le pic d'absorption se déplace d'une fréquence sensiblement égale à 6300 Hz à une fréquence sensiblement égale à 5000 Hz. L'augmentation de la résistivité au passage d'air du tissu d'aspect permet d'améliorer le coefficient dans une bande de fréquence plus large.

La forme et/ou le volume des cavités acoustiques peuvent également influencer la performance du résonateur. Les cavités acoustiques 2 sont de préférence sensiblement en forme de croix. Si on lie les cinq cavités de l'échantillon H de manière à former une croix, tel que représenté à la figure 4a, dont la profondeur et le diamètre restent respectivement sensiblement égales à 10 mm et à 5 mm, on obtient un échantillon J. En comparant l'échantillon H avec l'échantillon J, et tel que représenté à la figure 4b, le résonateur en forme de croix permet d'améliorer la performance d'absorption. Le pic d'absorption se situe pour des fréquences sensiblement comprises entre 3000 Hz et 4000 Hz, ce qui correspond bien à l'intervalle où se situe la fréquence de coïncidence d'un vitrage.

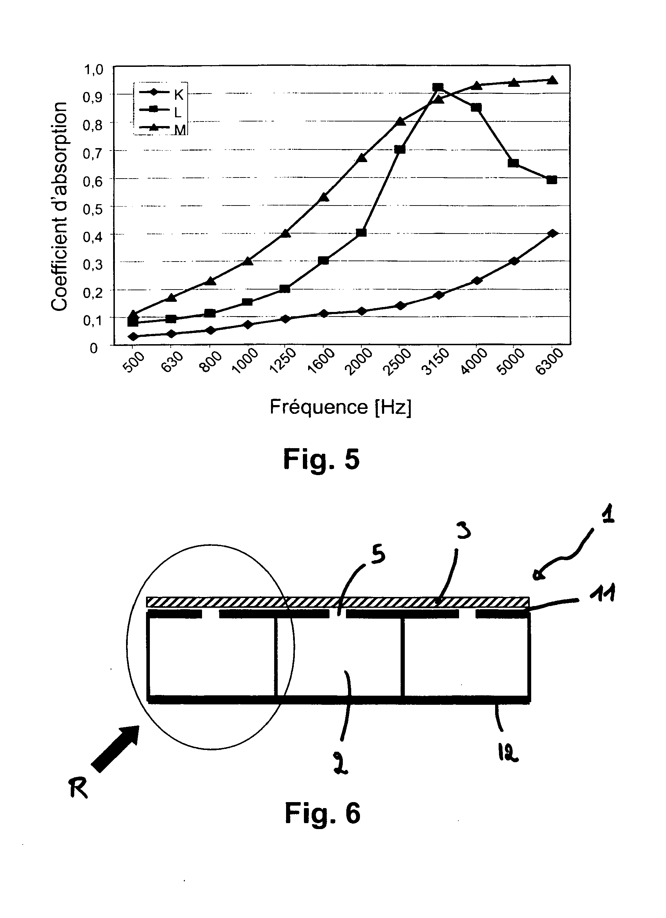

À la figure 5, on a représenté les courbes K, L, M de coefficient d'absorption en fonction de la fréquence d'un échantillon d'une tablette arrière de diamètre sensiblement égal à 30 mm et recouverts avec un tissu d'aspect de diamètre sensiblement égal à 4 mm, ayant une résistivité au passage d'air de sensiblement 700 Nsm⁻³. Le coefficient d'absorption (courbe K) atteint 90% pour des fréquences comprises entre 3000 Hz et 4000 Hz lorsque l'échantillon comporte une croix de profondeur sensiblement égale à 10 mm. On obtient le même résultat (courbe L) en utilisant un feutre d'une épaisseur de 20 mm dans la même bande de fréquence. Avec le tissu d'aspect seul (courbe M), le coefficient d'absorption n'est que d'environ 15% pour une fréquence sensiblement égale à 3000 Hz.

Les cavités acoustiques 2 peuvent avoir d'autres formes géométriques selon des contraintes d'architecture et de procédé de fabrication. Il sera compris, sans sortir du cadre de l'invention, que des cavités acoustiques 2 de différentes dimensions peuvent être formées pour couvrir une bande de fréquence plus large. La profondeur des cavités acoustiques 2 peut, par exemple, varier entre 4 et 6 millimètres. Pour être efficaces à basses fréquences, les cavités acoustiques 2 doivent par exemple être plus profondes et plus larges.

Selon une variante représentée à la figure 6, la tablette arrière 1 peut comporter une structure en nid d'abeille, comportant des alvéoles 2, compris entre une coque supérieure 11 et une coque inférieure 12. Des ouvertures 5 sont ménagées dans la coque supérieure 11 recouverte d'un tissu d'aspect 3. Chaque alvéole 2 devient alors un résonateur de Helmholtz R. Les dimensions des ouvertures ainsi que l'épaisseur de la coque supérieure 11 sont définies en fonction de la fréquence de coïncidence que l'on veut traiter.

Une autre variante, non représentée, consiste à remplacer les cavités acoustiques 2 par des inserts poreux dans la mousse PU.

Un tel agencement de tablette arrière 1 permet de maximiser le coefficient d'absorption pour des fréquences sensiblement comprises entre 3000 Hz et 4000 Hz afin de compenser la perte d'isolation de la lunette de hayon due à la fréquence de résonance. Une telle tablette permet d'obtenir un facteur d'absorption fort dans une bande de fréquence sélectionnée. Elle est très absorbante sur une bande de fréquence correspondant à la fréquence de coïncidence de la lunette de hayon.

De plus, il est possible de réduire les coûts de fabrication d'une telle tablette lorsque les cavités acoustiques sont formées dans l'armature de la tablette avant la réalisation de l'outillage.

Un tel agencement de dispositif d'isolation sonore peut être utilisé par exemple pour des panneaux de portières comportant des résonateurs de fréquence de résonance de la portière.

## Revendications

1. Agencement d'un dispositif d'absorption d'ondes sonores comportant un premier élément séparant l'extérieur et l'intérieur d'un véhicule automobile, et un deuxième élément intérieur audit véhicule comportant un corps de tablette (10) et une couche d'absorption d'ondes sonores (3), le premier élément transmettant des ondes sonores en direction du deuxième élément, le corps de tablette (10) comportant une face supérieure (100) recouverte par la couche d'absorption (3), et **caractérisé en ce que** le corps comporte des cavités acoustiques (2) débouchant dans ladite face supérieure (100) et présentant un coefficient d'absorption maximum à une fréquence de résonance sensiblement égale à une fréquence de coïncidence dudit premier élément.

2. Agencement selon la revendication 1 **caractérisé en ce que** le premier élément et le deuxième élément du dispositif sont respectivement une lunette de hayon et une tablette arrière.

3. Agencement selon la revendication 2 **caractérisé en ce que** la couche d'absorption (3) et les cavités acoustiques (2) fermées par ladite couche absorbant (3) forment des résonateurs dont la fréquence est sensiblement comprise entre 3000 Hz et 4000 Hz.

4. Agencement selon la revendication 2 ou 3 **caractérisé en ce que** la cavité acoustique (2) a une profondeur sensiblement supérieure à 5 millimètres, et de préférence sensiblement comprise entre 5 et 10 millimètres.

5. Agencement selon l'une des revendications précédentes **caractérisé en ce que** la couche d'absorption (3) est un tissu d'aspect poreux

6. Agencement selon l'une des revendications précédentes **caractérisé en ce que** le corps de tablette (10) est en mousse polyuréthane (PU).

7. Agencement selon l'une des revendications précédentes **caractérisé en ce que** le corps de tablette (10) comporte une pluralité de résonateurs (2) occupant au moins 10% de sa surface totale.

8. Agencement selon la revendication 2 **caractérisé en ce que** la cavité acoustique (2) est un insert poreux.

9. Agencement selon l'une des revendications précédentes **caractérisé en ce que** le deuxième élément comporte une coque semi rigide perméable intercalée entre le corps de tablette (10) et la couche d'absorption, la coque ayant une résistance au passage d'air sensiblement comprise entre 500 et 2000 Nsm⁻³ de manière que la rigidité des résonateurs (2) est renforcée.

10. Agencement selon l'une des revendications précédentes **caractérisé en ce que** le corps de tablette (10) comporte des résonateurs (2) en structure de nid d'abeille.

## Claims

1. Arrangement of a sound-wave absorption device comprising a first element, separating the interior of a motor vehicle from the outside, and a second element internal to said vehicle comprising a shelf body (10) and a sound-wave absorption layer (3), the first element transmitting sound waves in the direction of the second element, the shelf body (10) having an upper face (100) covered by the absorption layer (3), and **characterized in that** the body includes acoustic cavities (2) opening onto said upper face (100) and having a maximum absorption coefficient at a resonant frequency substantially equal to a coincident frequency of said element.

2. Arrangement according to Claim 1, **characterized in that** the first element and the second element of the device are a tailgate window and a rear shelf respectively.

3. Arrangement according to Claim 2, **characterized in that** the absorption layer (3) and the acoustic cavities (2) closed off by said absorbent layer (3) together form resonators, the frequency of which lies substantially between 3000 Hz and 4000 Hz.

4. Arrangement according to Claim 2 or 3, **characterized in that** the acoustic cavity (2) has a depth substantially greater than 5 millimetres and preferably substantially between 5 and 10 millimetres.

5. Arrangement according to one of the preceding claims, **characterized in that** the absorption layer (3) is a fabric of porous appearance.

6. Arrangement according to one of the preceding claims, **characterized in that** the shelf body (10) is made of polyurethane (PU) foam.

7. Arrangement according to one of the preceding claims, **characterized in that** the shelf body (10) comprises a plurality of resonators (2) occupying at least 10% of its total area.

8. Arrangement according to Claim 2, **characterized in that** the acoustic cavity (2) is a porous insert.

9. Arrangement according to one of the preceding claims, **characterized in that** the second element comprises a permeable semi-rigid shell inserted between the shelf body (10) and the absorption layer, the shell having an airflow resistance of substantially between 500 and 2000 N.s/m³ so that the rigidity of the resonators (2) is enhanced.

10. Arrangement according to one of the preceding claims, **characterized in that** the shelf body (10) comprises resonators (2) made of a honeycomb structure.

## Patentansprüche

1. Anordnung einer Schallwellen-Absorptionsvorrichtung, mit einem ersten Element, das die äußere Umgebung vom Innenraum eines Kraftfahrzeugs trennt, und einem zweiten Element innerhalb des Fahrzeugs, das einen Plattenkörper (10) und eine Schallwellen-Absorptionsschicht (3) enthält, wobei das erste Element Schallwellen in Richtung des zweiten Elements durchlässt, wobei der Plattenkörper (10) eine obere Fläche (100) aufweist, die durch die Absorptionsschicht (3) abgedeckt ist, **dadurch gekennzeichnet, dass** der Körper Schallhohlräume (2) umfasst, die in die obere Fläche (100) münden und einen maximalen Absorptionskoeffizienten bei einer Resonanzfrequenz aufweisen, die im Wesentlichen gleich einer Koinzidenzfrequenz des ersten Elements ist.

2. Anordnung nach Anspruch 1, **dadurch gekennzeichnet, dass** das erste Element und das zweite Element der Vorrichtung eine Heckklappenscheibe bzw. eine Heckablage sind.

3. Anordnung nach Anspruch 2, **dadurch gekennzeichnet, dass** die Absorptionsschicht (3) und die Schallhohlräume (2), die durch die absorbierende Schicht (3) geschlossen sind, Resonatoren bilden, deren Frequenz im Wesentlichen im Bereich von 3000 Hz bis 4000 Hz liegt.

4. Anordnung nach Anspruch 2 oder 3, **dadurch gekennzeichnet, dass** der Schallhohlraum (2) eine Tiefe besitzt, die im Wesentlichen größer als 5 Millimeter ist und vorzugsweise im Wesentlichen im Bereich von 5 bis 10 Millimetern liegt.

5. Anordnung nach einem der vorhergehenden Ansprüche, **dadurch gekennzeichnet, dass** die Absorptionsschicht (3) ein Gewebe mit porösem Aussehen ist.

6. Anordnung nach einem der vorhergehenden Ansprüche, **dadurch gekennzeichnet, dass** der Plattenkörper (10) aus Polyurethanschaum (PU) besteht.

7. Anordnung nach einem der vorhergehenden Ansprüche, **dadurch gekennzeichnet, dass** der Plattenkörper (10) mehrere Resonatoren (2) enthält, die wenigstens 10 % seiner Gesamtfläche belegen.

8. Anordnung nach Anspruch 2, **dadurch gekennzeichnet, dass** der Schallhohlraum (2) ein poröser Einsatz ist.

9. Anordnung nach einem der vorhergehenden Ansprüche, **dadurch gekennzeichnet, dass** das zweite Element einen permeablen halbstarren Rumpf enthält, der zwischen den Plattenkörper (10) und die Absorptionsschicht eingefügt ist, wobei der Rumpf einen Luftdurchlasswiderstand besitzt, der im Wesentlichen im Bereich von 500 bis 2000 Nsm⁻³ liegt, so dass die Steifigkeit der Resonatoren (2) verstärkt wird.

10. Anordnung nach einem der vorhergehenden Ansprüche, **dadurch gekennzeichnet, dass** der Plattenkörper (10) Resonatoren (2) mit Bienenwabenstruktur enthält.
